Europäisches Patentamt

(19) European Patent Office

Office européen des brevets

(11) Publication number: **0 316 981 B1**

## EUROPEAN PATENT SPECIFICATION

(45) Date of publication of patent specification: **26.05.93** (51) Int. Cl.⁵: **H02M 3/335**

(21) Application number: **88202416.9**

(22) Date of filing: **29.10.88**

(54) Electric converter.

(30) Priority: **16.11.87 BE 8701296**

(43) Date of publication of application:
**24.05.89 Bulletin 89/21**

(45) Publication of the grant of the patent:
**26.05.93 Bulletin 93/21**

(84) Designated Contracting States:
**AT BE CH DE ES FR GB IT LI NL SE**

(56) References cited:
**EP-A- 0 194 414
DE-A- 3 121 638
US-A- 4 209 826
US-A- 4 669 036**

(73) Proprietor: **ALCATEL N.V.
Strawinskylaan 341 (World Trade Center)
NL-1077 XX Amsterdam(NL)**

(84) Designated Contracting States:
**CH DE ES FR GB IT LI NL SE AT**

(73) Proprietor: **BELL TELEPHONE MANUFACTUR-
ING COMPANY Naamloze Vennootschap
Francis Wellesplein 1
B-2018 Antwerp(BE)**

(84) Designated Contracting States:
**BE**

(72) Inventor: **Ryckebusch, Frank
Oudstrijderslei 40
B-2070 Ekeren(BE)**

(74) Representative: **Vermeersch, Robert et al
BELL TELEPHONE MANUFACTURING COM-
PANY Naamloze Vennootschap Patent De-
partment Francis Wellesplein 1
B-2018 Antwerpen (BE)**

## Description

The present invention relates to a DC/DC electric converter for converting an input signal applied to an input circuit to an output signal generated by an output circuit, said converter including a pulse generator circuit controlled by said output signal and generating a pulse stream having an average frequency which is function of said output signal, and a pulse width modulator circuit controlled by said input signal and by said pulse stream and controlling a gating circuit forming part of said input circuit.

Such an electric converter is already known from the published European patent application 0194414. In this known converter the gating circuit is blocked during the pulse periods of the pulse stream, whereas during the dead periods thereof it is allowed to be enabled by the input signal.

An object of the present invention is to provide an electric converter of the above type but with a simplified control of the gating circuit.

According to the invention this object is achieved due to the fact that said modulator circuit provides a control pulse waveform for said gating circuit by converting each pulse of said pulse stream to a pulse having a width which is function of said input signal and by which said gating circuit is enabled.

As the pulse stream is transformed to a control pulse waveform for the gating circuit which is function of both the input and output signals the control of this gating circuit is simplified.

The above mentioned and other objects and features of the invention will become more apparent and the invention itself will be best understood by referring to the following description of an embodiment taken in conjunction with the accompanying drawings wherein :

Fig. 1 represents an electric converter according to the invention;

Fig. 2 shows switching regulator circuit SR of Fig. 1 in more detail;

Fig. 3 represents timing circuit TC of Fig. 1 in more detail.

Fig. 4 shows pulse waveforms appearing at various points of the converter.

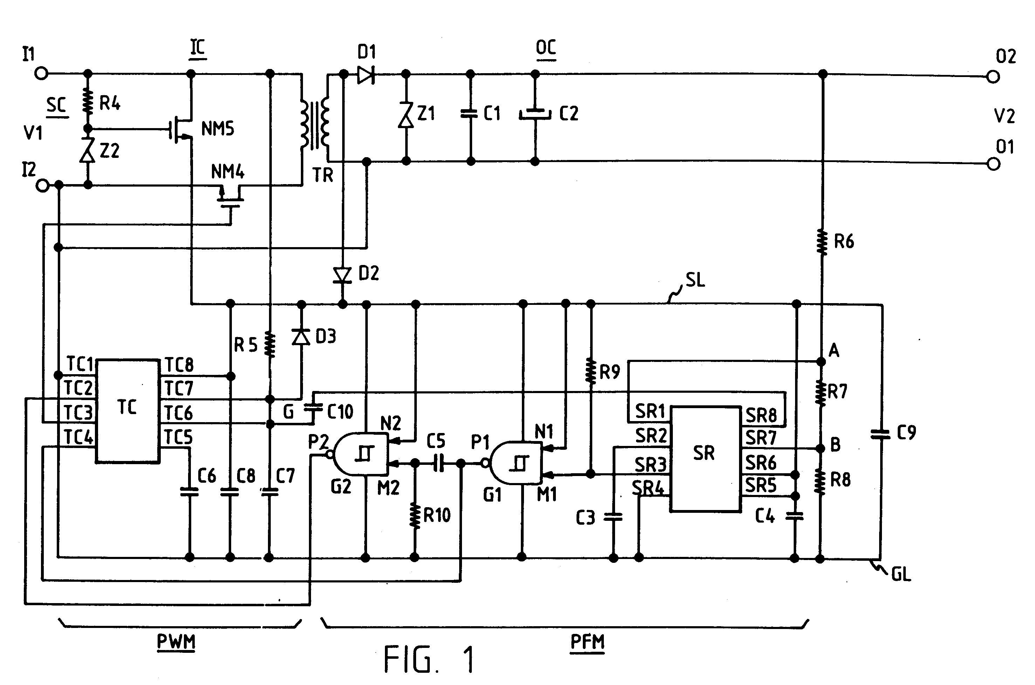

The converter shown in Fig. 1 includes an input circuit IC, an output circuit OC, a pulse frequency modulator circuit PFM, a pulse width modulator circuit PWM and an operation start circuit SC. It is built up by means of :

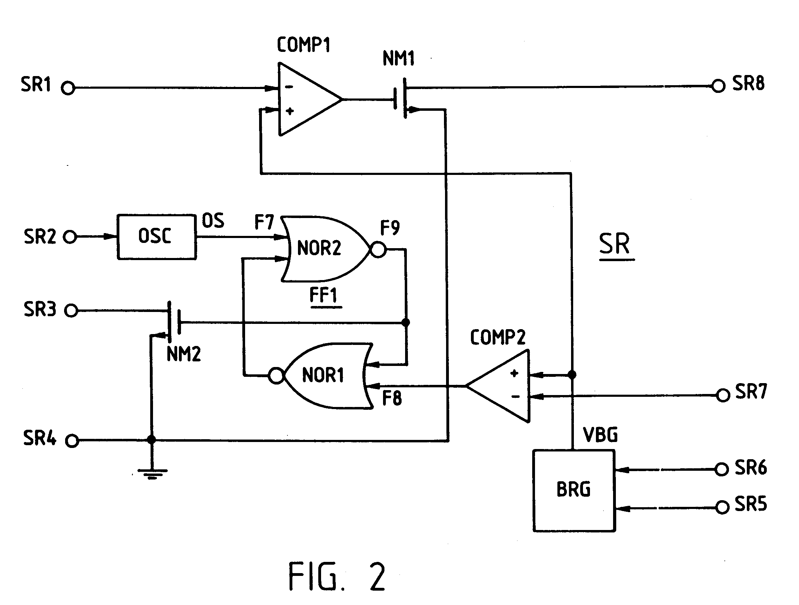

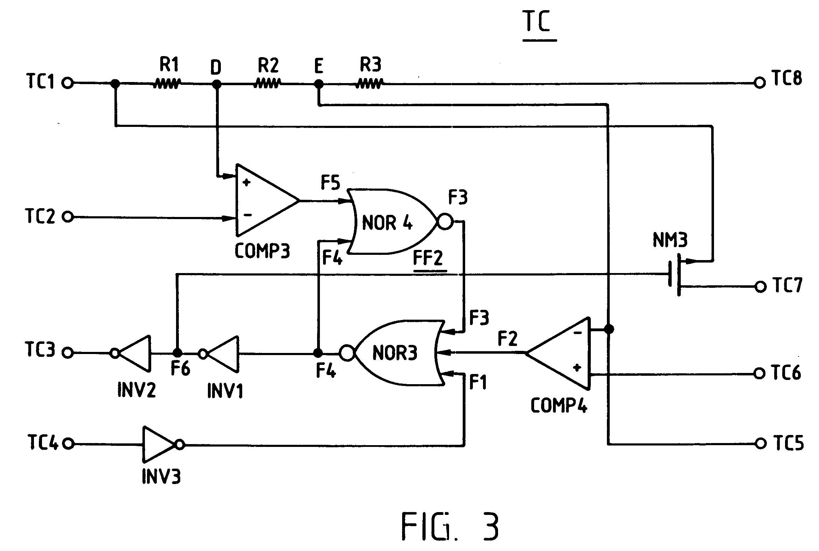

- a switching regulator circuit SR of the above MAX 630 type which is generally available on the Belgian market. This circuit is schematically shown in Fig. 2. It has terminals SR1 to SR8 and includes a bandgap reference generator BRG, an oscillator OSC, a flipflop FF1 comprising two cross − coupled NOR gates NOR1 and NOR2, two comparators COMP1 and COMP2 constituted by operational amplifiers, and two NMOS transistors NM1 and NM2;
- a timing circuit TC of the type ICM7555 also manufactured by Maxim and generally available on the Belgian market. This circuit is schematically shown in Fig. 3. It has terminals TC1 to TC8 and includes a flipflop FF2 comprising two cross − coupled NOR gates NOR3 and NOR4, comparators COMP3 and COMP4 constituted by operational amplifiers, NMOS transistor NM3, inverters INV1 to INV3 and resistances R1 to R3 of equal value;
- Schmitt trigger NAND gates G1, G2 and G3. A chip with 4 such gates and manufactured by Hitachi is generally available on the Belgian market under code number HD74 HC132P;
- a tranformer TR;
- further NMOS transistors NM4 and NM5;
- further resistors R4 to R10;
- capacitors C1 to C10;
- diodes D1 to D3;
- Zener diodes Z1 and Z2

The input circuit IC has input terminals I1 and I2 which are interconnected by the primary winding of transformer TR in series with the drain − to − source path of NMOS transistor NM4 which constitutes a gating circuit or electronic switch.

The output circuit OC has the output terminals O1 and O2 which are interconnected by the secondary winding of transformer TR in series with rectifier diode D1. Capacitor C1, capacitor C2 and Zener diode Z1 are branched in parallel across the output terminals O1 and O2. Terminals O2 and I2 are interconnected.

The operation start circuit SC includes NMOS transistor NM5 whose drain − to − source path is connected between input terminal I1 and a common supply lead SL and whose gate is connected to the junction point of resistance R4 and Zener diode Z2 which are connected in series between the input terminals I1 and I2.

The pulse frequency modulator circuit PFM includes the switching regulator circuit SR whose terminals SR1 to SR8 are connected as follows :

2

- terminal SR1 is connected to tapping a point A of a resistive voltage divider which comprises resistances R6, R7, R8 coupled in series between output terminal O2 and ground lead GL;
- terminal SR2 is connected to ground lead GL through capacitor C3 which determines the frequency of the oscillator OSC forming part of SR;
- terminals SR3 and SR8 constitute output terminals of SR and will be considered later;
- terminal SR4 is the ground terminal of SR and is directly connected to ground lead GL;
- terminals SR5 and SR6 are both connected, on the one hand directly to the supply lead SL and on the other hand to ground lead GL in series with capacitor C4;
- terminal SR7 is connected to the tapping point B of the voltage divider R6/R8.

As shown in Fig. 2, inside the switching regulator SR terminal SR1 is connected to the inverting input of comparator COMP1 whose non−inverting input is connected to the output VBG of the bandgap reference generator BRG. The output of COMP1 controls the gat of NMOS transistor NM1 whose drain−to−source path is connected between terminal SR8 and ground terminal SR4. Terminal SR2 is connected to the input of oscillator OSC whose output is coupled to input F7 of flipflop FF1. Another input F8 of this flipflop is connected to the output of comparator COMP2 whose inverting and non−inverting inputs are coupled to terminal SR7 and output VBG of BRG respectively. Terminal SR3 is connected to ground terminal SR4 through the drain−to−source path of NMOS transistor NM2 whose gate is controlled by the output F9 of the flipflop FF1. Finally, terminals SR5 and SR6 are connected to inputs of the bandgap reference circuit BRG.

The above mentioned output terminal SR3 of the circuit SR is directly connected to the first input M1 of gate G1 which is fed between supply lead SL and ground lead GL and whose second input N1 is directly connected to SL which is further coupled to input M1 through resistance R9. The output P1 of G1 is connected to the first input M2 of gate G2 via a differentiator circuit comprising series capacitor C5 and shunt resistance R10 which is connected between M2 and ground lead GL. The input N2 of G2 which is fed between SL and GL is directly connected to SL and the output P2 of this gate constitutes the output of the pulse frequency modulator circuit PFM.

The pulse width modulator circuit PWM includes the timing circuit TC whose terminals TC1 to TC8 are connected as follows :
- ground terminal TC1 is connected to input terminal I2, output terminal O1 and ground lead GL;
- output P2 of gate G2 is connected to trigger terminal TC2;
- terminal TC3 is connected to the gate of NMOS transistor NM4;
- output P1 of gate G1 is connected to terminal TC4;
- terminal TC5 is connected to ground lead GL via capacitor C6;
- terminals TC6 and TC7 are both connected to the output G of an integrator circuit comprising resistance R5 connected to input terminal I1 and capacitor C7 connected to ground lead GL. This output G is moreover connected to supply lead SL through clamping diode D3 and to terminal SR8 of SR via capacitor C10;
- terminal TC8 is connected on the one hand directly to supply lead SL and on the other hand to ground lead GL via capacitor C8.

As shown in Fig. 3, inside the timing circuit TC terminal TC1 is connected to terminal TC8 via a resistive voltage divider comprising the series connected equal resistances R1 to R3 and having tapping points D and E. Terminal TC2 is connected to the inverting input of comparator COMP3 whose non−inverting input is connected to the tapping point D of R1/3 and whose output constitutes input F5 of the flipflop FF2. The output F4 of this flipflop FF2 is connected to terminal TC3 via the series connected inverters INV1 and INV2. Terminal TC4 is connected to input F1 of flipflop FF2 through inverter INV3 and the input F2 of this flipflop is constituted by the output of comparator COMP4. Terminal TC5 is connected to the inverting input of this comparator COMP4 and to tapping point E of voltage divider R1/3, whilst terminal TC6 is connected to the non−inverting input of this comparator. Finally, terminal TC7 is connected to the drain electrode of discharge NMOS transistor NM3 whose source electrode is connected to terminal TC1 and whose gate is coupled to the junction point F6 of inverters INV1 and INV2.

The above described DC to DC converter operates as follows.

When an input voltage V1 is applied across the input terminals I1 and I2 of the input circuit IC a current is able to flow from I1 to I2 which is connected to the ground lead GL through resistance R4 and Zener diode Z2 in series. When this current is sufficiently high a Zener voltage of e.g. 5.6 Volts is established at the junction point of these components due to which transistor NM5 whose source is grounded via resistors R3 to R1 becomes conductive. As a consequence current is then able to flow from input terminal I1 to the ground lead GL through the drain−to−source path of NM5, supply lead SL and a plurality of parallel connected circuits. Thus both the supply lead SL and the terminal TC8 of TC are brought at a voltage VSL equal to the Zener voltage less the threshold voltage of NM5.

As a consequence and when assuming that the values of the resistances R1 to R3 are equal,

$$\text{voltages } VD = \frac{VSL}{3} \text{ and } VE = \frac{2VSL}{3}$$

are established at the respective tapping points D and E of the voltage divider R1/3 and therefore also at the non-inverting input of comparator COMP3 and at the inverting input of comparator COMP4 respectively. Because terminal TC2 is normally activated the output F5 of COMP3 is deactivated. Also the output F2 of COMP4 is normally deactivated because the voltage at terminal G or TC6, TC7 is smaller than VE. The flipflop FF2 is in a condition wherein the outputs F4 and F3 of its gates NOR3 and NOR4 are deactivated and activated respectively. The inputs F1, F2 and F3 of gate NOR3 are deactivated (due to terminal TC4 being activated), deactivated and activated respectively Terminal TC3 is deactivated thus blocking transistor NM4 of the input circuit IC, whereas terminal F6 is activated so that transistor NM3 is conductive and thus connects G and TC6, TC7 to the ground at terminal TC1 via its drain-to-source path. This means that as long as the flipflop FF2 is in the reset condition wherein its output F4 is deactivated a voltage is prevented from being built up at terminal G or TC6, TC7, due to which the input F2 of this flipflop remains in the deactivated condition.

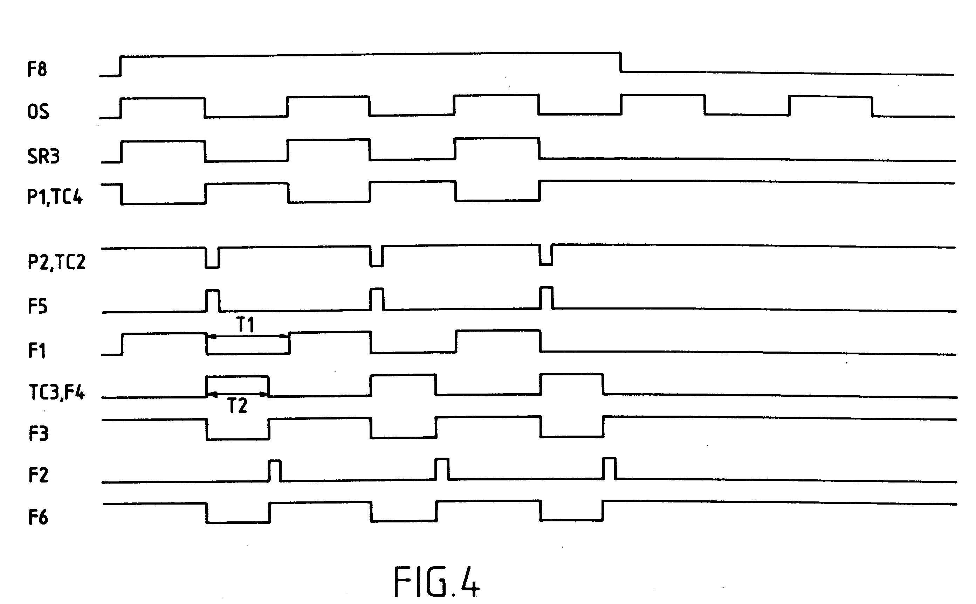

The above mentioned voltage VSL is also applied to the Schmitt trigger gates G1 and G2 as well as to the terminals SR3 and SR5, SR6 of the switching regulator SR forming part of the circuit PFM, i.e. to SR3 via resistance R9 and directly to SR5 and SR6. As a consequence the reference generator BRG generates the bandgap reference voltage VBG on its like named output VBG. Because initially no current flows in the output circuit OC the output terminal O2 is at ground potential so that the voltages VSR1 and VSR7 on terminals SR1 and SR7 of the switching regulator SR are both smaller than this bandgap reference voltage VBG. As a consequence the outputs of comparators COMP1 and COMP2 are both activated due to which transistor NM1 becomes conductive, thus connecting capacitor C10 in parallel with capacitor C7, and flipflop FF2 is triggered to its set condition wherein the output F9 of its gate NOR2 is deactivated. Due to this the pulses OS (Fig. 4) of a square pulse waveform with period 2T1 generated by the oscillator OSC are allowed to pass through this gate NOR2 wherein they are inverted before being supplied to the gate of transistor NM2. In this transistor the pulses are again inverted and appear at the output SR3 of SR as a pulse stream SR3 (Fig. 4) whose pulses vary between VSL and ground. This pulse stream SR3 is inverted and shaped in the Schmitt trigger gate G1 and is then supplied as a pulse stream P1, TC4 (Fig. 4) from the output P1 of G1 to the differentiator circuit C5, R10 as well as to the input TC4 of the timing circuit TC. In this differentiator circuit C5, R10 the pulses of P1, TC4 are differentiated and in the subsequent Schmitt trigger gate G2 the resultant pulses are clamped, shaped and inverted so that a pulse stream P2, TC2 (Fig. 4) comprising negatively directed pulses is generated at the output P2 of gate G2. As shown in Fig. 4 these pulses occur at the beginning of each of the positively directed pulses of P1, TC4. From P2 they are supplied to terminal TC2 of the timing circuit TC.

In this timing circuit TC the pulse stream P1, TC4 is inverted in the inverter INV3 so that it is applied as a pulse stream F1 (Fig. 4) to the like named input F1 of flipflop FF2. Each of the negatively directed pulses of P2, TC2 applied to terminal TC2 brings the comparator COMP3 in a condition wherein the output F5 (Fig. 4) thereof is temporarily activated. Hence, a pulse stream F5 constituted by positively directed pulses each occurring after the end of a positively directed pulse of F1 is applied to input F5 of the flipflop FF2.

The effect of the pulse streams F1, F2 and F5 on the flipflop FF2 is that a control pulse waveform TC3 and a pulse stream F6 are generated, as explained hereinafter and shown in Fig. 4.

Indeed, each time the input F1 is activated the flipflop FF2 is reset to the condition wherein its output F4 and terminal TC3 are both deactivated, whereas terminal F6 is activated. As a consequence transistor NM4 is then blocked whereas transistor NM3 is conductive and thus prevents a voltage from being built up on terminal G or TC6, TC7, as already described above. Each time the input F5 is activated the flipflop FF2 is triggered to its set condition wherein its output F4 and terminal TC3 are both activated, whereas terminal F6 is deactivated. As a consequence transistor NM4 then becomes conductive, whereas transistor NM3 is blocked so that on the one hand the input voltage V1 is applied to the primary winding of transformer TR thus storing electric energy therein and that, on the other hand, a current starts flowing through the integrator circuit R5, C7, C10 and so that an exponentially increasing voltage VG is generated on the terminal G of TC6, TC7. When this voltage VG reaches the threshold voltage VE after a time interval T2 the output F2 of comparator COMP4 becomes activated so that flipflop FF2 is then triggered back to its reset condition wherein output F4 and terminal TC4 are both de-activated and terminal F6 is activated. As a consequence transistor NM4 is then blocked, whereas transistor NM3 becomes conductive. Due to this the current flow in the primary winding of transformer TR is interrupted, but a current then starts flowing in the secondary winding thereof via the then conductive diode D1 so that an output voltage V2 is built up across output terminals O2 and O1. This voltage is filtered by capacitor C1. Meanwhile, capacitor C7 is discharged to ground through the conductive transistor NM3, and when the voltage on terminal G or TC6, TC7 decreases below the threshold voltage VE the output F2 of COMP4 again becomes deactivated.

From the above it is clear that each time transistor NM4 is conductive a current flows in the primary winding of transformer TR, whilst a current is supplied to a load, connected across the output terminals O1, O2, through the secondary winding of this transformer when transistor NM4 is blocked and diode D1 is conductive. It should moreover be noted that during the time intervals wherein NM4 is conductive and diode D1 is blocked current is supplied to the load by the reservoir capacitor C2. Thus the output voltage V2 is gradually built up.

From the above it also follows that the flipflop FF2 in combination with the comparator COMP4 and the integrator circuit R5, C7, C10 in fact is a monostable circuit which is triggered to its unstable condition for a time interval T2 by the pulses of pulse stream F5. If it were not reset before the end of time interval T1 this flipflop is anyhow reset by a pulse of pulse stream F1.

The integrator circuit R5, C7, C10 provides a voltage VG approximately given by the relation :

$$VG = \tfrac{t}{T} V1 \qquad (1)$$

with $T = R5.(C7 + C10)$ (2)

Hence, this voltage is directly proportional to the input voltage V1. Because this voltage is supposed to reach the threshold voltage VE after a time interval T2 the latter is given by the following relation :

$$T2 = \frac{VE.T}{V1} \qquad (3)$$

Because VE.T is a constant the time interval T2 which is also the (variable) width of each of the pulses of the control pulse waveform TC3, F4 (Fig. 4) is inversely proportional to the input voltage V1. Hence the circuit PWM really modifies the width of the pulses of F5 in function of the input voltage V1.

It should also be noted that the peak value of the current flowing in the primary winding of the transformer is a constant. Indeed, this peak value which is reached at the end of the time interval T2 is given by :

$$ip = \frac{V1.T2}{L} \qquad (5)$$

or, when taking the relation (3) into account by :

$$ip = \frac{VE.T}{L} \qquad (6)$$

wherein L is the self inductance of this primary winding.

Considering again the pulse frequency modulator circuit PFM, as soon as the output voltage V2 exceeds the voltage VSL by the voltage drop in diode D2 the voltage VSL is determined by this output voltage V2 and blocks transistor NM5 is blocked. This voltage is filtered by capacitor C9.

As soon as this output voltage V2 reaches a value such that the voltage VA at the tapping point A of the voltage divider R6/8, i.e. at terminal SR1, exceeds the bandgap reference voltage VGB the output of comparator COMP1 of the switching regulator SR becomes de−activated due to which transistor NM1 is blocked. As a consequence capacitor C10 is then no longer connected across capacitor C7 so that the time constant T is then decreased and becomes

$T' = R5.C7$ (7)

whilst the time interval T2 is reduced to

$$T'2 = \frac{VE \cdot T'}{V1} \qquad (8)$$

Hence, at the start of the operation of the converter pulses of the control pulses waveform have a maximum width T2 and afterwards a reduced width T'2. This means that at the start much electric energy is supplied to the output unit DC.

When the output voltage V2 reaches a still higher value such that the voltage VB at the tapping point B of the voltage divider R6/8, i.e. at terminal SR7, exceeds the bandgap reference voltage VBG the output F8 of comparator COMP2 becomes de−activated. Due to this the flipflop FF1 is triggered to its set condition wherein its output F9 is activated and terminal SR3 deactivated (Fig. 4). Thus the passage of oscillator pulses through gate NOR2 and towards timing circuit TC is inhibited.

This situation continues as long as the voltage at terminal SR7 exceeds the reference voltage VBG, but as soon as this is no longer so the flipflop FF1 is again triggered to its reset condition to again allow the flow of the pulse streams P1, TC4 and P2, TC2 to the timing circuit TC. Because the flow of these pulse streams is directly controlled by the output voltage V2 it is clear that their average frequency is function of V2, the pulses themselves having a constant width.

From the above it follows that the converter :
- generates a pulse stream F5 the pulses of which have a constant width and an average frequency which is solely function of the output voltage V2;
- converts each of the pulses of of this pulse stream F5 to a control pulse whose width T2 is solely function (inversely proportional) of the input voltage V1 and which forms part of a control pulse waveform TC3, F4. Only at the start of an operation this width is also function of the output voltage V2.

Hence, the control pulse waveform TC3, F4 has two parameters, i.e. its average frequency and the width of its pulses, which are normally solely function of this output and input voltages V2 and V1 respectively. Thus the electric power supplied by the converter can be regulated independently in function of the input and output voltage values.

## Claims

1. DC to DC electric converter for converting an input signal (V1) applied to an input circuit (IC) to an output signal (V2) generated by an output circuit (OC), said converter including a pulse generator circuit (PFM, COMP3) controlled by said output signal (V2) and generating a pulse stream (F5) having an average frequency which is function of said output signal, and a pulse width modulator circuit (PWM) controlled by said input signal (V1) and by said pulse stream (F5) and controlling a gating circuit (NM4) forming part of said input circuit (IC), characterized in that said modulator circuit (PWM) provides a control pulse waveform (TC3, F4) for said gating circuit by converting each pulse of said pulse stream (F5) to a pulse having a width which is function of said input signal and by which said gating circuit (NM4) is enabled.

2. Converter according to claim 1, characterized in that it further includes a transformer (TR) whose primary and secondary windings form part of said input (IC) and output (OC) circuits respectively, said output circuit (OC) further including a rectifier−filter circuit (D1, C1, C2) providing said output signal (V2).

3. Converter according to claim 1, characterized in that said pulse stream (F5) generated by said pulse generator circuit (PFM, COMP3) is interrupted when said output signal (V2) or a function thereof (SR7) exceeds a predetermined reference value (VBG), and that said converter further includes a monostable circuit (FF2, COMP4, R5, C7) with a set input (F5) to which said pulse stream (F5) is supplied and with an output (TC3) on which said control pulse waveform (TC3, F4) is generated, said monostable circuit having a time constant (T'2) which is function of said input signal (V1).

4. Converter according to claim 3, characterized in that it includes a time constant modifying circuit (COMP1, NM1, C10) to make said time constant (T'2) also function of said output signal (V2) as long as said output signal (V2) or a function thereof (SR1) does not exceed said predetermined reference value (VBG).

**5.** Converter according to claim 4, characterized in that said monostable circuit (FF2, COMP4, R5, C7), includes an integrator circuit (R5, C7, C10) which is constituted by the series connection of a resistance (R5) and a first capacitance (C7) and which is fed by said input signal (V1), said resistance (R5) and said first capacitance (C7) determining said time constant (T'2), and that said time constant modifying circuit (COMP1, NM1, C10) is able to detect when said output signal (V2) or a function thereof (SR1) does not exceed/exceeds said predetermined reference value (VBG) and to then connect/disconnect a second capacitance (C10) across/from said first capacitance (C7).

**6.** Converter according to claim 3, characterized in that said pulse generator circuit (PFM, COMP3) also generates a second pulse stream (P1, TC4) which is also interrupted when said output signal (V2) or a function thereof (SR7) exceeds said predetermined reference value (VBG) and which is supplied to a reset input (F1) of said monostable circuit to reset this circuit for a predetermined time interval (T1) immediately preceeding each pulse of said first mentioned pulse stream (F5).

**Patentansprüche**

**1.** Elektrischer Gleichstrom/Gleichstrom – Wandler zur Wandlung eines an eine Eingangsschaltung (IC) angelegten Eingangssignales (V1) in ein durch eine Ausgangsschaltung (OC) erzeugtes Ausgangssignal (V2), wobei der genannte Wandler eine durch das genannte Ausgangssignal (V2) gesteuerte Impuls – generatorschaltung (PFM, COMP3) aufweist und einen Impulsstrom (F5) erzeugt, dessen mittlere Frequenz eine Funktion des genannten Ausgangssignales ist, und weiter eine durch das genannte Eingangssignal (V1) und durch den genannten Impulsstrom (F5) gesteuerte Impulsbreitenmodulator – schaltung (PWM) aufweist und eine Torschaltung (NM4) steuert, die Teil der genannten Eingangs – schaltung (IC) bildet, dadurch gekennzeichnet, dass die genannte Modulatorschaltung (PWM) für die genannte Torschaltung eine Steuerimpulssignalform (TC3, F4) erzeugt, indem jeder Impuls des ge – nannten Impulsstromes (F5) in einen Impuls mit einer Breite gewandelt wird, welche eine Funktion des genannten Eingangssignales ist und mit welchem die genannte Torschaltung (NM4) freigegeben wird.

**2.** Wandler nach Anspruch 1, dadurch gekennzeichnet, dass er weiter einen Transformator (TR) aufweist, dessen Primär – bzw. Sekundärwicklung Teil der Eingangs – (IC) bzw. Ausgangs – (OC) Schaltung bilden, wobei die genannte Ausgangsschaltung (OC) weiter eine Gleichrichter – Filterschaltung (D1, C1, C2) aufweist, welche das genannte Ausgangssignal (V2) vorsieht.

**3.** Wandler nach Anspruch 1, dadurch gekennzeichnet, dass der genannte, durch die genannte Impuls – generatorschaltung (PFM, COMP3) erzeugte Impulsstrom (F5) unterbrochen wird, wenn das genannte Ausgangssignal (V2) oder eine Funktion (SR7) davon einen vorbestimmten Referenzwert (VBG) über – steigt, und dass der genannte Wandler weiter eine monostabile Schaltung (FF2, COMP4, R5, C7) aufweist mit einem Setzeingang (F5), an welchen der genannte Impulsstrom (F5) angelegt wird, und mit einem Ausgang (TC3), an welchem die genannte Steuerimpulssignalform (TC3, F4) erzeugt wird, wobei die genannte monostabile Schaltung eine Zeitkonstante (T'2) besitzt, welche eine Funktion des genannten Eingangssignales (V1) ist.

**4.** Wandler nach Anspruch 3, dadurch gekennzeichnet, dass er eine Zeitkonstanten – Modifikationsschai – tung (COMP1, NM1, C10) aufweist, um die genannte Zeitkonstante (T'2) auch eine Funktion des genannten Ausgangssignales (V2) zu machen, solange das genannte Ausgangssignal (V2) oder eine Funktion (SR1) davon den genannten vorbestimmten Referenzwert (VBG) nicht übersteigt.

**5.** Wandler nach Anspruch 4, dadurch gekennzeichnet, dass die genannte monostabile Schaltung (FF2, COMP4, R5, C7) eine Integratorschaltung (R5, C7, C10) aufweist, welche durch die Serieschaltung eines Widerstandes (R5) und eines ersten Kondensators (C7) gebildet und durch das genannten Eingangssignal (V1) gespeist wird, wobei der genannte Widerstand (R5) und der genannte erste Kondensator (C7) die genannte Zeitkonstante bestimmen, und dass die genannte Zeitkonstanten – Modifikationsschaltung (COMP1, NM1, C10) in der Lage ist, zu detektieren, ob das genannte Aus – gangssignal (V2) oder eine Funktion (SR1) davon den genannten vorbestimmten Referenzwert (VBG) nicht übersteigt oder übersteigt, und dann einen zweiten Kondensator (C10) über den genannten ersten Kondensator (C7) anzuschliessen oder von diesem zu trennen.

**6.** Wandler nach Anspruch 3, dadurch gekennzeichnet, dass die genannte Impulsgeneratorschaltung (PFM, COMP3) weiter einen zweiten Impulsstrom (P1, TC4) erzeugt, welcher ebenfalls unterbrochen wird, wenn das genannten Ausgangssignal (V2) oder eine Funktion (SR7) davon den genannten vorbestimmten Referenzwert (VBG) übersteigt, und welcher an einen Rückstelleingang (F1) der ge − nannten monostabilen Schaltung angelegt wird, um diese Schaltung für ein bestimmtes Zeitintervall (T1) zurückzustellen, welches jedem Impuls des erstgenannten Impulsstromes (F5) unmittelbar vor − ausgeht.

**Revendications**

**1.** Convertisseur électrique de courant continu en courant continu pour convertir un signal d'entrée (V1) appliqué à un circuit d'entrée (IC) en un signal de sortie (V2) engendré par un circuit de sortie (OC), ledit convertisseur comportant un circuit générateur d'impulsions (PFM, COMP3) commandé par ledit signal de sortie (V2) et engendrant un train d'impulsions (F5) ayant une fréquence moyenne qui est fonction dudit signal de sortie, et un circuit modulateur de largeur d'impulsions (PWM) commandé par ledit signal d'entrée (V1) et par ledit train d'impulsions (R5) et commandant un circuit de porte (NM4) faisant partie dudit circuit d'entrée (IC), caractérisé en ce que ledit circuit modulateur (PWM) fournit une forme d'onde d'impulsions de commande (TC3, F4) pour ledit circuit de porte en convertissant chaque impulsion dudit train d'impulsions (F5) en une impulsion ayant une largeur qui est fonction dudit signal d'entrée et qui sert à valider ledit circuit de porte (NM4).

**2.** Convertisseur conforme à la revendication 1, caractérisé en ce qu'il comprend en outre un transforma − teur (TR) dont les enroulements primaire et secondaire font respectivement partie dudit circuit d'entrée (IC) et dudit circuit de sortie (OC), ledit circuit de sortie (OC) comprenant de plus un circuit de redressement et de filtrage (D1, C1, C2) fournissant ledit signal de sortie (V2).

**3.** Convertisseur conforme à la revendication 1, caractérisé en ce que ledit train d'impulsions (F5) engendré par ledit circuit générateur d'impulsions (PFM, COMP3) est interrompu lorsque ledit signal de sortie (V2) ou une fonction de celui − ci (SR7) dépasse une valeur de référence prédéterminée (VBG) et en ce que ledit convertisseur comprend de plus un circuit monostable (FF2, COMP4, R5, C7) avec une entrée d'activation (F5) à laquelle ledit train d'impulsions (F5) est fourni et avec une sortie (TC3) sur laquelle ladite forme d'onde d'impulsions de commande (TC3, F4) est engendrée, ledit circuit monostable ayant une constante de temps (T'2) qui est fonction dudit signal d'entrée (V1).

**4.** Convertisseur conforme à la revendication 3, caractérisé en ce qu'il comprend un circuit de modifica − tion de constante de temps (COMP1, NM1, C10) pour rendre ladite constante de temps (T'2) également fonction dudit signal de sortie (V2) tant que ledit signal de sortie (V2) ou une fonction de celui − ci (SR1) ne dépasse pas ladite valeur de référence prédéterminée (VBG).

**5.** Convertisseur conforme à la revendication 4, caractérisé en ce que ledit circuit monostable (FF2, COMP4, R5, C7) comporte un circuit intégrateur (R5, C7, C10) qui est constitué par la connexion en série d'une résistance (R5) et un premier condensateur (C7) et qui est alimenté par ledit signal d'entrée (V1), ladite résistance(R5) et ledit premier condensateur (C7) déterminant ladite constante de temps (T'2) et en ce que ledit circuit de modification de constante de temps (COMP1, NM1, C10) est capable de détecter quand ledit signal de sortie (V2) ou une fonction de celui − ci (SR1) ne dépasse pas ou dépasse ladite valeur de référence prédéterminée (VBG) et pour alors connecter ou déconnecter un deuxième condensateur (C10) aux bornes dudit premier condensateur (C7).

**6.** Convertisseur conforme à la revendication 3, caractérisé en ce que ledit circuit générateur d'impulsions (PFM, COMP3) engendre aussi un deuxième train d'impulsions (P1, TC 4) qui est aussi interrompu lorsque ledit signal de sortie (V2) ou une fonction de celui − ci (SR7) dépasse ladite valeur de référence prédéterminée (VBG) et qui est fourni à une entrée de réinitialisation (F1) dudit circuit monostable pour réinitialiser ce circuit durant un intervalle de temps prédéterminé (T1) précédant immédiatement chaque impulsion dudit train d'impulsions mentionné en premier (F5).

FIG. 1

FIG. 2

EP 0 316 981 B1

FIG. 3

EP 0 316 981 B1

FIG.4